# EUROPÄISCHE PATENTSCHRIFT

(11) **EP 3 510 295 B1**
(45) Veröffentlichungstag und Bekanntmachung des Hinweises auf die Patenterteilung: **14.02.2024**
(21) Anmeldenummer: 17762122.4
(22) Anmeldetag: 07.09.2017
(51) Int. Cl.: F16D 48/06

(54) **VERFAHREN ZUM SYNCHRONISIEREN ZWEIER ANTRIEBSELEMENTE EINES ANTRIEBSSTRANGS EINES KRAFTFAHRZEUGS, SOWIE ANTRIEBSSTRANG FÜR EIN KRAFTFAHRZEUG**
METHOD FOR SYNCHRONIZING TWO DRIVE ELEMENTS OF A POWERTRAIN OF A MOTOR VEHICLE, AND POWERTRAIN FOR A MOTOR VEHICLE
PROCÉDÉ PERMETTANT DE SYNCHRONISER DEUX ÉLÉMENTS D'ENTRAÎNEMENT D'UNE CHAÎNE CINÉMATIQUE D'UN VÉHICULE AUTOMOBILE, ET CHAÎNE CINÉMATIQUE POUR UN VÉHICULE AUTOMOBILE

(30) Priorität: 08.09.2016 DE 102016217096
(43) Veröffentlichungstag der Anmeldung: 17.07.2019
(73) Patentinhaber: Audi AG, 85045 Ingolstadt (DE)
(72) Erfinder: WEINHARDT, Mathias, 85051 Ingolstadt (DE)
(74) Vertreter: Bierschneider, Walter
(86) Internationale Anmeldenummer: PCT/EP2017/072424
(87) Internationale Veröffentlichungsnummer: WO 2018/046581

(56) Entgegenhaltungen:
- WO-A1-2007/014636
- DE-A1-102006 042 355
- US-A- 5 630 773

## Beschreibung

Die Erfindung betrifft ein Verfahren zum Synchronisieren zweier Antriebselemente eines Antriebsstrangs eines Kraftfahrzeugs gemäß dem Oberbegriff von Patentanspruch 1, sowie einen Antriebsstrang für ein Kraftfahrzeug gemäß dem Oberbegriff von Patentanspruch 10.

Derartige Verfahren zum Synchronisieren eines um eine Drehachse drehbaren ersten Antriebselements mit einem sich um die Drehachse mit einer Zieldrehzahl drehenden zweiten Antriebselement eines Kraftfahrzeugs, insbesondere eines Kraftwagens wie beispielsweise eines Personenkraftwagen, ist aus dem allgemeinen Stand der Technik und insbesondere aus dem Serienfahrzeugbau bereits hinlänglich bekannt. Bei dem Verfahren wird mittels eines Aktors eine Synchronisierkraft auf eine Synchronisiereinrichtung ausgeübt, wodurch eine Drehzahl, mit welcher sich das erste Antriebselement um die Drehachse dreht, mittels der Synchronisiereinrichtung an die Drehzahl angeglichen wird. Dieses Angleichen der Drehzahl des ersten Antriebselements an die Zieldrehzahl des zweiten Antriebselements wird auch als Synchronisierung oder Synchronisation bezeichnet.

Das Verfahren kommt beispielsweise in einem Getriebe, insbesondere in einem automatisierten Getriebe oder einem Automatikgetriebe, zum Einsatz, wobei das Getriebe beispielsweise ein automatisiertes Schaltgetriebe beziehungsweise ein automatisiertes Handschaltgetriebe ist. Beispielsweise kann das Getriebe als Doppelkupplungsgetriebe ausgebildet sein.

Üblicherweise umfasst der Antriebsstrang eine elektronische Recheneinrichtung, welche auch als Steuergerät bezeichnet wird. Die elektronische Recheneinrichtung ist dazu ausgebildet, den Aktor anzusteuern, um dadurch die Synchronisierkraft beziehungsweise das Ausüben der Synchronisierkraft auf die Synchronisiereinrichtung einzustellen. Dies bedeutet, dass die elektronische Recheneinrichtung den Aktor ansteuert, um dadurch den Aktor zu betreiben und dabei beispielsweise anzusteuern oder zu regeln.

Unter dem Angleichen der Drehzahl an die Zieldrehzahl ist insbesondere zu verstehen, dass eine Differenz zwischen der Zieldrehzahl und der Drehzahl zumindest verkleinert oder vorzugsweise aufgehoben wird. Durch das Verkleinern, insbesondere das Aufheben, der Differenz zwischen der Drehzahl und der Zieldrehzahl ist es dann beispielsweise möglich, die Antriebselemente - nachdem die Differenz verkleinert oder aufgehoben wurde - formschlüssig und dadurch drehfest miteinander zu verbinden beziehungsweise zu koppeln, ohne dass es zu einer übermäßigen Belastung des Antriebsstrangs und/oder zur Entstehung von unerwünschten Geräuschen kommt.

Die DE 103 25 354 A1 offenbart ein Verfahren zum Betrieb eines Antriebsstrangs eines Kraftfahrzeugs, mit einer Antriebsmaschine, einem Getriebe, einem fremdkraftbetätigten, nicht lastschaltbaren Verteilergetriebe, und wenigstens einer Steuerungseinrichtung für die Ansteuerung der Antriebsmaschine und des Verteilergetriebes. Bei Vorliegen einer Schaltanforderung für das Verteilergetriebe wird eine Schaltung durch die Steuerungseinrichtung ausgeführt. Dabei ist es vorgesehen, dass die Steuerungseinrichtung vor Beginn der Schaltung ein Drehmoment an den an der Schaltung beteiligten Schaltgliedern reduziert und nach Abschluss der Schaltung ein Drehmoment an den genannten Schaltgliedern wieder zulässt.

Ferner offenbart die DE 10 2009 053 039 A1 ein Verfahren zum Steuern eines Antriebsstrangs eines Kraftfahrzeugs, mit einer während einer Leerlaufphase auf eine konstante Leerlaufdrehzahl gesteuerten Brennkraftmaschine mit einer Kurbelwelle, einem Getriebe und einer zwischen Getriebe und Antriebseinheit wirksamen Reibungskupplung. Dabei ist es vorgesehen, dass während einer Anfahrphase des Kraftfahrzeugs ein sich infolge einer beginnenden Übertragung eines Kupplungsmoments über die Reibungskupplung einstellendes und die Leerlaufdrehzahl absenkendes Störmoment abhängig von dem sich aktuell einstellenden Kupplungsmoment kompensiert wird.

Des Weiteren ist der WO 2011/057310 A1 ein Verfahren zur Auslegung der Sperrsicherheit eines Sperrelements einer Getriebe-Synchronisationsvorrichtung gegen ein Schalten vor Herstellung des Gleichlaufes eines Losrades mit einer Antriebswelle als bekannt zu entnehmen. In der Getriebe-Synchronisationsvorrichtung wird zumindest ein Kraftverstärkungselement vorgesehen, das eine, zu einer durch einen Schaltvorgang erzeugten Axialkraft zusätzliche Axialkraft erzeugt, wodurch in einem Reibelement ein Reibmoment erzeugt wird, welches einem Entsperrmoment entgegenwirkt. Dabei ist es vorgesehen, dass über die zusätzliche Axialkraft ein variables Reibmoment erzeugt und eine Sperrsicherheit eingestellt wird, die zwischen einer statischen und einer dynamischen Sperrsicherheit wechselt.

Die DE 10 2006 042 355 A1 offenbart ein Verfahren zum Überbrücken der Drehzahldifferenz zwischen dem Motor und dem Triebstrang für ein Fahrzeug, umfassend ein Getriebe mit einer Anfahrkupplung, wobei die Ansteuerung der Anfahrkupplung elektrohydraulisch erfolgt, bei dem mittels einer elektronischen Steuerung in Abhängigkeit von der jeweiligen Fahrsituation eine Sollmotordrehzahl generiert wird, die über eine Drehzahlregelung und/oder Drehzahlsteuerung in einen Solldruck für die Ansteuerung der Anfahrkupplung umgerechnet wird. Die Sollwertgenerierung umfasst zwei Grundfunktionen, wobei die erste Grundfunktion eine Überführungsfunktion zwischen der Ist-/Soll-Drehzahl der Antriebsseite und der Ist-Drehzahl der Abtriebsseite der Kupplung bei quasi konstantem Fahrerwunsch ist, und wobei die zweite Grundfunktion eine Überführungsfunktion zwischen der Ist-/Soll-Drehzahl der Antriebsseite und einer Zieldrehzahl der Antriebsseite der Kupplung entsprechend der Leistungsanforderung aus einem Fahrerwunsch ist und bei einer signifikanten Änderung der Leistungsanforderung aktiviert wird. Wenn der Fahrer durch eine signifikante Änderung des Fahrpedalwertes den Wunsch anzeigt, mehr oder weniger Antriebsleistung zu bekommen, wird dies getriebeseitig unterstützt, indem die erste Grundfunktion abgebrochen wird und die zweite Grundfunktion ausgeführt wird.

Ferner ist aus der WO 2007/014636 A1 ein Verfahren zum Einstellen einer Drehzahl einer Welle eines Zahnräderwechselgetriebes eines Kraftfahrzeugs als bekannt zu entnehmen, wobei zwischen dem Zahnräderwechselgetriebe und einer Antriebsmaschine eine automatisierte Kupplung angeordnet ist und die Einstellung der Drehzahl mittels eines über die Kupplung übertragenen Drehmoments der Antriebsmaschine erfolgt, wobei ein Sollwert für eine Kupplungsposition der Kupplung in Abhängigkeit von einer Drehzahldifferenz zwischen einer gemessenen Drehzahl der Welle und einer Zieldrehzahl festgelegt wird.

Aufgabe der vorliegenden Erfindung ist es, ein Verfahren und einen Antriebsstrang der eingangs genannten Art derart weiterzuentwickeln, dass eine besonders komfortable Synchronisierung der Antriebselemente realisierbar ist.

Diese Aufgabe wird durch ein Verfahren mit den Merkmalen des Patentanspruchs 1 sowie durch einen Antriebsstrang mit den Merkmalen des Patentanspruchs 10 gelöst. Vorteilhafte Ausgestaltungen mit zweckmäßigen Weiterbildungen der Erfindung sind in den übrigen Ansprüchen angegeben.

Ein erster Aspekt der Erfindung betrifft ein Verfahren zum Synchronisieren eines um eine Drehachse drehbaren ersten Antriebselements mit einem sich um die Drehachse mit einer Zieldrehzahl drehenden zweiten Antriebselement eines Antriebsstrangs eines Kraftfahrzeugs, insbesondere eines Kraftwagens wie beispielsweise eines Personenkraftwagens. Im Rahmen des Verfahrens dreht sich das zweite Antriebselement um die Drehachse mit der Zieldrehzahl, sodass das sich um die Drehachse drehende zweite Antriebselement die Zieldrehzahl aufweist. Das erste Antriebselement kann beispielsweise hinsichtlich einer Drehung um die Drehachse stillstehen oder sich beispielsweise ebenfalls um die Drehachse drehen.

Bei dem Verfahren wird mittels eines Aktors, welcher auch als Stellglied bezeichnet wird, eine Synchronisierkraft auf eine Synchronisiereinrichtung des Antriebsstrangs ausgeübt, wodurch eine Drehzahl, mit welcher sich das erste Antriebselement um die Drehachse dreht, mittels der Synchronisiereinrichtung an die Zieldrehzahl angeglichen wird. Dies bedeutet, dass durch das Angleichen der Drehzahl an die Zieldrehzahl und somit durch das Synchronisieren des ersten Antriebselements mit dem zweiten Antriebselement eine gegebenenfalls existierende Differenz zwischen der Drehzahl und der Zieldrehzahl zumindest reduziert, insbesondere aufgehoben, wird. Wird die Differenz zwischen der Drehzahl und der Zieldrehzahl aufgehoben, so entspricht die Drehzahl der Zieldrehzahl, sodass beispielsweise hinsichtlich einer jeweiligen Drehung um die Drehachse ein Gleichlauf der Antriebselemente vorliegt.

Um nun die Antriebselemente auf besonders komfortable Weise synchronisieren und beispielsweise in der Folge auf besonders komfortable Weise formschlüssig und somit drehfest miteinander koppeln zu können, ist es erfindungsgemäß vorgesehen, dass die Synchronisierkraft während einer ersten Zeitspanne erhöht wird, sodass sich die Drehzahl der Zieldrehzahl annähert. Während einer auf die erste Zeitspanne folgenden, zweiten Zeitspanne wird die Synchronisierkraft - bevor die Drehzahl der Zieldrehzahl entspricht - kontinuierlich reduziert. Durch das erfindungsgemäße Verfahren, insbesondere durch das erfindungsgemäße Einstellen der Synchronisierkraft, kann beispielsweise vermieden werden, dass es beim Synchronisieren der Antriebselemente, insbesondere bei einer drehfesten und beispielsweise formschlüssigen Kopplung der Antriebselemente, zu einem übermäßigen Ruck kommt, welcher beispielsweise von Insassen des Kraftfahrzeugs wahrgenommen und als unangenehm empfunden werden könnte.

Der Erfindung liegt dabei insbesondere die Erkenntnis zugrunde, dass unterschiedliche Verfahren existieren, bei welchen die Synchronisiereinrichtung zielgerichtet derart betätigt wird, dass mittels eines jeweiligen Aktors auf die jeweilige Synchronisiereinrichtung eine Synchronisierkraft ausgeübt wird, wobei Energie, welche aus einem Abtrieb zum Synchronisieren entnommen wird, um dadurch beispielsweise das eine träge Masse darstellende erste Antriebselement zu beschleunigen, keine für Fahrzeuginsassen spürbare Auswirkungen auf die Geschwindigkeit beziehungsweise die Beschleunigung des Kraftfahrzeugs hat, wobei jedoch vorrangig eine initiale Betätigung und somit ein Druckaufbau und die Regelung eines konstanten Gradienten, insbesondere im Rahmen einer Druckregelung, bis zu einer Entsperrphase, insbesondere einer mechanischen Entsperrphase, im Vordergrund stehen. Diese Verfahren berücksichtigen üblicherweise zwar, dass ein Einbringen eines Störmoments an einem Rad des Kraftfahrzeugs zum Zweck der Synchronisierung bei einer entsprechenden Fahrsituation angepasst sein muss, jedoch wird nicht berücksichtigt, dass mechanisch bedingt am Ende der Synchronisierung eine schlagartige mechanische Entkopplung stattfindet, welche auch als Entsperren oder Entsperrvorgang bezeichnet wird.

Im Rahmen des Entsperrens gibt beispielsweise ein Synchronring eine Verschiebung einer Schaltmuffe frei, sodass die Schaltmuffe relativ zu dem Synchronring verschoben werden kann, um dadurch beispielsweise die Antriebselemente formschlüssig drehfest miteinander zu koppeln. Dadurch, dass das Entsperren üblicherweise schlagartig stattfindet, steht schlagartig ein Zusatzmoment zum Antreiben des zuvor genannten Rads beziehungsweise des Kraftfahrzeugs insgesamt zur Verfügung, wodurch es zu einer ruckartigen und von Insassen des Kraftfahrzeugs wahrnehmbaren Beschleunigung des Kraftfahrzeugs kommen kann. Eine solche, ruckartige Beschleunigung des Kraftfahrzeugs kann mittels des erfindungsgemäßen Verfahrens vermieden werden, da die Synchronisierkraft, nachdem sie während der ersten Zeitspanne, insbesondere zumindest im Wesentlichen kontinuierlich, erhöht wurde, während der zweiten Zeitspanne zumindest im Wesentlichen kontinuierlich reduziert wird, wobei mit der zumindest im Wesentlichen kontinuierlichen Reduzierung der Synchronisierkraft begonnen wird, bevor die Drehzahl die Zieldrehzahl erreicht hat, das heißt bevor die Drehzahl der Zieldrehzahl entspricht. Durch das erfindungsgemäße Verfahren kann somit ein an einem Rad des Kraftfahrzeugs auftretendes und die Fahrgeschwindigkeit beziehungsweise die Beschleunigung des Kraftfahrzeugs unerwünschterweise beeinflussendes Störmoment besonders gering gehalten oder vermieden werden.

Das erfindungsgemäße Verfahren ist dabei besonders vorteilhaft durchzuführen in Fahrsituationen, in denen ein Antriebsmoment zum Antreiben des Rads beziehungsweise des Kraftfahrzeugs insgesamt sehr gering ist. Dieses Antriebsmoment wird beispielsweise von wenigstens einem Antriebsmotor des Antriebsstrangs bereitgestellt, wobei der Antriebsmotor beispielsweise als Verbrennungskraftmaschine oder aber als elektrische Maschine beziehungsweise als Elektromotor ausgebildet sein kann. Es wurde gefunden, dass bei geringen Antriebsmomenten bereits kleinste Störmomente am Rad und somit bereits geringste, durch die Synchronisierung der Antriebselemente bewirkte Änderungen der Fahrgeschwindigkeit beziehungsweise der Beschleunigung des Kraftfahrzeugs von Insassen des Kraftfahrzeugs wahrgenommen werden können, was jedoch nun mittels des erfindungsgemäßen Verfahrens vermieden werden kann.

Beispielsweise ist es im Rahmen des Verfahrens vorgesehen, dass die Drehzahl des ersten Antriebselements zunächst geringer als die Zieldrehzahl ist, sodass im Rahmen der Synchronisierung der Antriebselemente die Drehzahl des ersten Antriebselements erhöht und somit an die Zieldrehzahl angeglichen wird. Hierzu wird das erste Antriebselement beispielsweise beschleunigt, wobei es vorgesehen sein kann, dass das erste Antriebselement mittels der beziehungsweise über die Synchronisiereinrichtung von dem zweiten Antriebselement und somit von von dem zweiten Antriebselement bereitgestellter Energie beschleunigt wird. Die Synchronisiereinrichtung ist vorzugsweise als Reibsynchronisierung oder Reibsynchronisation ausgebildet, sodass im Rahmen der Synchronisierung die Drehzahl an die Zieldrehzahl durch Reibung angeglichen wird. Somit ist es beispielsweise vorgesehen, dass das erste Antriebselement über die Synchronisiereinrichtung zunächst reibschlüssig mit dem zweiten Antriebselement gekoppelt wird, wodurch das erste Antriebselement beschleunigt wird. Nach einer hinreichenden Verringerung, insbesondere nach Aufhebung, der Differenz zwischen der Drehzahl und der Zieldrehzahl kann die Synchronisiereinrichtung beispielsweise durchgeschaltet werden, wodurch die Antriebselemente über die Synchronisiereinrichtung beispielsweise formschlüssig und dadurch drehfest miteinander gekoppelt werden. Insbesondere kann nach hinreichender Reduzierung, insbesondere nach Aufhebung, der Differenz zwischen der Drehzahl und der Zieldrehzahl der zuvor genannte, insbesondere mechanische, Entsperrvorgang stattfinden, sodass die Antriebselementen beispielsweise über die zuvor genannte Schaltmuffe formschlüssig und dadurch drehfest miteinander gekoppelt werden können.

In vorteilhafter Ausgestaltung der Erfindung wird die Synchronisierkraft während der zweiten Zeitspanne derart kontinuierlich reduziert, dass sich die Drehzahl des ersten Antriebselements weiter der Zieldrehzahl annähert. Zwar erfolgt während der zweiten Zeitspanne eine zumindest im Wesentlichen kontinuierliche Reduzierung der Synchronisierkraft, jedoch wird dadurch weiterhin eine Annäherung der Drehzahl an die Zieldrehzahl bewirkt, sodass vorzugsweise auch während der zweiten Zeitspanne eine Synchronisierung des ersten Antriebselements mit dem zweiten Antriebselement erfolgt. Dadurch kann die zur Synchronisierung der Antriebselemente erforderliche Zeit besonders gering gehalten werden, wobei ferner eine besonders komfortable Synchronisierung realisierbar ist.

Als besonders vorteilhaft hat es sich gezeigt, wenn die Synchronisierkraft während der zweiten Zeitspanne derart kontinuierlich reduziert wird, dass sich die Drehzahl weiter der Zieldrehzahl annähert, insbesondere so lange, bis die Drehzahl der Zieldrehzahl entspricht. Hierdurch wird beispielsweise eine etwaig existierende Differenz zwischen der Drehzahl und der Zieldrehzahl aufgehoben, das heißt beispielsweise auf Null reduziert, sodass dann in der Folge ein besonders komfortables und ruckfreies formschlüssiges und somit drehfestes Koppeln der Antriebselemente erfolgen kann.

Als besonders vorteilhaft hat es sich gezeigt, wenn die Synchronisierkraft während der zweiten Zeitspanne kontinuierlich reduziert wird, bevor eine mechanische Entsperrphase beginnt. Die mechanische Entsperrphase entspricht beispielsweise dem zuvor beschriebenen mechanischen Entsperrvorgang beziehungsweise dem Entsperren. Bei der mechanischen Entsperrphase gibt ein Synchronring der Synchronisiereinrichtung eine Schiebemuffe der Synchronisiereinrichtung für eine Verschiebung der Schiebemuffe entlang der Drehachse frei. Insbesondere gibt der Synchronring das Verschieben der Schiebemuffe erst dann frei, wenn die Differenz zwischen der Drehzahl und der Zieldrehzahl hinreichend reduziert, insbesondere aufgehoben, wurde. Nachdem der Synchronring die Schiebemuffe für deren Verschiebung entlang der Drehachse freigegeben hat, wird die Schiebemuffe, insbesondere mittels der Synchronisierkraft, entlang der Drehachse relativ zu dem Synchronring verschoben und dadurch in Eingriff mit einer korrespondierenden Verzahnung gebracht, um dadurch die Antriebselemente über die Verzahnung und die Schiebemuffe formschlüssig drehfest miteinander zu koppeln.

Durch das beschriebene Freigeben kann die Schiebemuffe somit durchgeschaltet werden, um die Antriebselemente formschlüssig und dadurch drehfest miteinander zu koppeln. Beispielsweise arbeitet die Synchronisiereinrichtung nach dem hinlänglich bekannten Borg-Warner-Prinzip, sodass die Synchronisiereinrichtung beispielsweise vom hinlänglich bekannten Borg-Warner-Typ ist. Dieser Ausführungsform liegt somit die Idee zugrunde, beispielsweise in bestimmten Fahrsituationen, insbesondere in niedrigen und somit komfortrelevanten Lastbereichen, die an der Synchronisiereinrichtung anliegende Synchronisierkraft kontinuierlich abzusenken, das heißt zu reduzieren, um einen zumindest im Wesentlichen harmonischen Momentenverlauf am Rad zu ermöglichen, bevor die mechanische Entsperrphase beginnt. Idealerweise wird das Störmoment bis zu diesem Zeitpunkt gänzlich abgebaut, sodass ein besonders hoher Komfort, insbesondere ein besonders hoher Schaltkomfort, realisiert werden kann, insbesondere in Fahrsituationen, in denen das Antriebsmoment sehr gering ist.

Um eine besonders komfortable Synchronisierung der Antriebselemente zu realisieren, ist es bei einer weiteren Ausführungsform der Erfindung vorgesehen, dass die Synchronisierkraft während einer sich an die zweite Zeitspanne anschließenden dritten Zeitspanne erhöht wird. Hierdurch können beispielsweise die Antriebselemente besonders sicher formschlüssig und somit drehfest miteinander gekoppelt werden.

Dabei hat es sich als besonders vorteilhaft gezeigt, wenn die Synchronisierkraft während der dritten Zeitspanne linear erhöht wird, um dadurch einen besonders hohen Komfort zu realisieren.

Eine weitere Ausführungsform zeichnet sich dadurch aus, dass als das erste Antriebselement ein Gangrad eines Getriebes mit dem zweiten Antriebselement synchronisiert wird, um dadurch eine besonders komfortable Schaltung zu realisieren.

Dabei ist es bei einer weiteren Ausführungsform der Erfindung vorgesehen, dass das Gangrad bei einem Gangwechsel des Getriebes mit dem zweiten Antriebselement synchronisiert wird. Dadurch kann mittels des erfindungsgemäßen Verfahrens ein besonders komfortabler Gangwechsel, das heißt eine besonders komfortable Schaltung des Getriebes realisiert werden, welches beispielsweise als Automatikgetriebe beziehungsweise als automatisiertes Schaltgetriebe, insbesondere als automatisiertes Handschaltgetriebe, ausgebildet ist. Insbesondere ist das Getriebe beispielsweise als Doppelkupplungsgetriebe ausgebildet.

Schließlich hat es sich als besonders vorteilhaft gezeigt, wenn als das zweite Antriebselement eine Welle verwendet wird, welche von wenigstens einem Rad des Kraftfahrzeugs angetrieben wird. Dabei kann beispielsweise das Gangrad über die Schiebemuffe und die Verzahnung formschlüssig mit der Welle gekoppelt und somit drehfest verbunden werden, insbesondere im Rahmen eines Gangwechsels des Getriebes. Ferner ist es denkbar, dass das erste Antriebselement eine weitere Welle des Antriebsstrangs ist.

Ein zweiter Aspekt der Erfindung betrifft einen Antriebsstrang für ein Kraftfahrzeug, insbesondere für einen Kraftwagen wie beispielsweise einen Personenkraftwagen. Der Antriebstrang umfasst ein um eine Drehachse drehbares erstes Antriebselement und ein um die Drehachse drehbares zweites Antriebselement. Ferner umfasst der Antriebsstrang eine Synchronisiereinrichtung zum Synchronisieren des ersten Antriebselements mit dem zweiten Antriebselement. Ferner ist ein Aktor vorgesehen, mittels welchem eine Synchronisierkraft auf die Synchronisiereinrichtung ausübbar ist, um dadurch eine Drehzahl des ersten Antriebselements an eine Zieldrehzahl des zweiten Antriebselements mittels der Synchronisiereinrichtung anzugleichen. Mittels der Synchronisierkraft wird beispielsweise die Synchronisiereinrichtung, insbesondere wenigstens ein Synchronisierelement der Synchronisiereinrichtung, entlang der Drehachse, insbesondere relativ zu den Antriebselementen, bewegt, insbesondere verschoben, um dadurch die Antriebselementen zu synchronisieren, das heißt um dadurch die Drehzahl an die Zieldrehzahl anzugleichen.

Der Antriebsstrang umfasst ferner eine elektronische Recheneinrichtung, welche auch als Steuergerät bezeichnet wird und dazu ausgebildet ist, den Aktor anzusteuern, um dadurch das Ausüben der Synchronisierkraft auf die Synchronisiereinrichtung einzustellen.

Um nun eine besonders komfortable Synchronisierung der Antriebselemente zu realisieren, ist es erfindungsgemäß vorgesehen, dass die elektronische Recheneinrichtung dazu ausgebildet ist, den Aktor derart anzusteuern, dass die Synchronisierkraft während einer ersten Zeitspanne ansteigt, sodass sich die Drehzahl der Zieldrehzahl annähert. Ferner ist die elektronische Recheneinrichtung dazu ausgebildet, den Aktor derart anzusteuern, dass die Synchronisierkraft während einer auf die erste Zeitspanne folgenden, zweiten Zeitspanne kontinuierlich reduziert wird, bevor die Drehzahl der Zieldrehzahl entspricht. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in der einzigen Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in der einzigen Fig. Diagramme zum Veranschaulichen eines erfindungsgemäßen Verfahrens zum Synchronisieren zweier Antriebselemente eines Antriebsstrangs eines Kraftfahrzeugs.

Im Folgenden wird anhand der Fig. ein Verfahren zum Synchronisieren eines um eine Drehachse drehbaren ersten Antriebselements mit einem sich um die Drehachse mit einer Zieldrehzahl drehenden zweiten Antriebselement eines Antriebsstrangs eines Kraftfahrzeugs, insbesondere eines Kraftwagens wie beispielsweise eines Personenkraftwagens, erläutert. Im Rahmen des Verfahrens dreht sich beispielsweise das zweite Antriebselement mit der Zieldrehzahl um die Drehachse, sodass das zweite Antriebselement die Zieldrehzahl aufweist. Dabei ist die Zieldrehzahl von 0 unterschiedlich beziehungsweise weist einen von 0 unterschiedlichen Wert auf.

Das erste Antriebselement steht beispielsweise hinsichtlich einer Drehung um die Drehachse still, sodass sich das erste Antriebselement beispielsweise zunächst nicht um die Drehachse dreht. Ferner ist es denkbar, dass sich das erste Antriebselement mit einer Drehzahl, insbesondere mit einer von 0 unterschiedlichen Drehzahl, um die Drehachse dreht, wobei die Drehzahl beispielsweise von der Zieldrehzahl unterschiedlich ist. Insbesondere ist die Drehzahl beispielsweise geringer als die Zieldrehzahl, sodass beispielsweise das erste Antriebselement im Rahmen der Synchronisierung beschleunigt wird, und sodass die Drehzahl des ersten Antriebselements erhöht wird.

Die Fig. zeigt eine Mehrzahl von Diagrammen 10, 12, 14 und 16, auf deren jeweiliger Ordinate 18 die Zeit t aufgetragen ist. Das Verfahren wird beispielsweise bei einem Getriebe des Antriebsstrangs angewendet. Der Antriebsstrang umfasst dabei das Getriebe und wenigstens einen Antriebsmotor, welcher Drehmomente zum Antreiben wenigstens eines Rads des Kraftfahrzeugs und somit zum Antreiben des Kraftfahrzeugs insgesamt bereitstellen kann. Das jeweilige, von dem Antriebsmotor bereitgestellte Drehmoment wird beispielsweise über das Getriebe und wenigstens eine Welle zu dem wenigstens einen Rad übertragen, wodurch das Rad mittels des Drehmoments angetrieben werden kann. Das Verfahren wird insbesondere während einer Fahrt des Kraftfahrzeugs durchgeführt, wobei das Kraftfahrzeug während der Fahrt entlang einer Fahrbahn gefahren wird. Dabei rollt das wenigstens eine Rad an der Fahrbahn ab.

Das Getriebe weist beispielsweise eine Mehrzahl von einlegbaren beziehungsweise schaltbaren Gängen auf. Unter einer Schaltung beziehungsweise unter einem Gangwechsel des Getriebes ist somit zu verstehen, dass ein erster der Gänge ausgelegt und ein zweiter der Gänge eingelegt wird. Dabei handelt es sich beispielsweise bei dem ersten Antriebselement um ein Gangrad des zweiten Gangs, wobei das zweite Antriebselement beispielsweise die zuvor genannte Welle ist, über welche das Rad antreibbar ist. Insbesondere wird das Rad über die Welle von dem Antriebsmotor in einem Zugbetrieb des Antriebsmotors angetrieben. Hierzu erfolgt ein Drehmomentenfluss von dem Antriebsmotor über das Getriebe auf die Welle und über diese zu dem Rad. Bei einem Gangwechsel wird beispielsweise dieser Drehmomentenfluss zwischen dem Antriebsmotor und der Welle, insbesondere zwischen dem Antriebsmotor und dem Getriebe, unterbrochen, indem beispielsweise ein Anfahrelement wie beispielsweise eine Reibkupplung geöffnet wird. Dann wird beispielsweise die Welle von dem wenigstens einen Rad angetrieben, sodass die Welle (zweites Antriebselement) mit der Zieldrehzahl um die Drehachse rotiert.

Da zunächst der erste Gang eingelegt ist beziehungsweise war, und im Rahmen des Gangwechsels der erste Gang ausgelegt und der zweite Gang eingelegt wird, dreht sich das beispielsweise als Gangrad des zweiten Gangs ausgebildete erste Antriebselement nicht um die Drehachse, oder das erste Antriebselement dreht sich mit einer gegenüber der Zieldrehzahl geringeren Drehzahl um die Drehachse.

Bei dem Verfahren zum Synchronisieren der Antriebselemente wird mittels eines Aktors eine Synchronisierkraft auf eine Synchronisiereinrichtung ausgeübt, wodurch die Drehzahl, mit welcher sich das erste Antriebselement um die Drehachse dreht, mittels der Synchronisiereinrichtung an die Zieldrehzahl angeglichen wird. Dies bedeutet, dass eine Differenz zwischen der Drehzahl des ersten Antriebselements und der Zieldrehzahl des zweiten Antriebselements zumindest reduziert, insbesondere aufgehoben, wird. Da beispielsweise die Drehzahl geringer als die Zieldrehzahl ist, wird das erste Antriebselement über die Synchronisiereinrichtung von dem zweiten Antriebselement beschleunigt, wodurch die Drehzahl des ersten Antriebselements erhöht und dadurch der Zieldrehzahl angenähert wird.

Die Synchronisiereinrichtung ist beispielsweise als Reibsynchronisierung ausgebildet. Dabei umfasst die Synchronisiereinrichtung beispielsweise einen drehfest mit der Welle verbundenen Träger, welcher auch als Synchronkörper bezeichnet wird. Der Synchronkörper weist beispielsweise eine erste Verzahnung auf. Ferner umfasst die Synchronisiereinrichtung eine Schiebemuffe, welche teilweise auf dem Synchronkörper angeordnet und entlang der Drehachse relativ zu dem Synchronkörper verschiebbar ist. Dabei weist die Schiebemuffe eine zweite Verzahnung auf, welche zumindest teilweise mit der ersten Verzahnung in Eingriff steht. Ferner umfasst die Synchronisiereinrichtung beispielsweise wenigstens einen Synchronring, welcher einen ersten Reibkonus aufweist. Außerdem umfasst die Synchronisiereinrichtung einen Kupplungskörper, welcher beispielsweise drehfest mit dem Gangrad verbunden ist und einen mit dem ersten Reibkonus korrespondierenden, zweiten Reibkonus aufweist. Der erste Reibkonus und der zweite Reibkonus bilden eine Kegelreibkupplung, welche geöffnet und geschlossen werden kann, indem der Synchronring entlang der Drehachse relativ zu dem Kupplungskörper verschoben wird. Dabei weist beispielsweise der Synchronring beispielsweise eine dritte Verzahnung auf, wobei der Kupplungskörper eine vierte Verzahnung aufweist. Da die Schiebemuffe über ihre zweite Verzahnung in die erste Verzahnung des Synchronkörpers eingreift, und da der Synchronkörper drehfest mit dem zweiten Antriebselement gekoppelt ist, wird die Schiebemuffe über den Synchronkörper und dabei über die erste Verzahnung und die zweite Verzahnung von dem zweiten Antriebselement angetrieben, welches von dem wenigstens einen Rad angetrieben wird. Somit rotieren auch der Synchronkörper und die Schiebemuffe mit der Zieldrehzahl um die Drehachse. Vor der Synchronisierung sind der Kupplungskörper und das erste Antriebselement nicht mit dem zweiten Antriebselement gekoppelt, sodass sich diese relativ zueinander drehen können.

Der Synchronring ist beispielsweise zumindest mittelbar mit dem Synchronkörper gekoppelt, sodass der Synchronkörper den Synchronring mitnimmt. Dies bedeutet, dass der Synchronring über den Synchronkörper von dem zweiten Abtriebselement um die Drehachse gedreht wird, sodass auch der Synchronring mit der Zieldrehzahl um die Drehachse rotiert.

Im Rahmen des Gangwechsels werden nun die Antriebselemente synchronisiert, indem mittels des Aktors die Synchronisierkraft auf die Synchronisiereinrichtung und dabei insbesondere auf die Schiebemuffe ausgeübt wird. Mittels der Synchronisierkraft werden die Schiebemuffe und über diese zumindest mittelbar der Synchronring in Richtung des Gangrads und somit in Richtung des mit dem Gangrad drehfest verbundenen Kupplungskörpers entlang der Drehachse verschoben, sodass der erste Reibkonus in Kontakt mit dem zweiten Reibkonus kommt. Dadurch werden beispielsweise der Kupplungskörper und das Gangrad, zumindest annähernd, auf die Drehzahl des Synchronrings gebracht. Dies erfolgt insbesondere im Rahmen einer Vorsynchronisierung. Mit anderen Worten wird durch die Vorsynchronisierung die Differenz zwischen der Drehzahl und der Zieldrehzahl zumindest verringert. Wird die Schiebemuffe beispielsweise weiter, insbesondere mittels der Synchronisierkraft, in Richtung des Gangrads und des Kupplungskörpers verschoben, so kommt die Schiebemuffe, insbesondere ihre zweite Verzahnung, in Kontakt mit dem Synchronring, insbesondere mit der dritten Verzahnung. Hierdurch wird der Synchronring mittels der Schiebemuffe besonders stark gegen den Kupplungskörper gedrückt, sodass der erste Reibkonus und der zweite Reibkonus zusammengedrückt werden. Hierdurch wird beispielsweise eine durch die Reibkonen gebildete Reibkegelkupplung geschlossen beziehungsweise weiter geschlossen. Zunächst sperrt beispielsweise der Synchronring die Schiebemuffe gegen eine Verschiebung der Schiebemuffe entlang der Drehachse in Richtung des Kupplungskörpers, insbesondere so lange, bis die Differenz zwischen der Drehzahl und der Zieldrehzahl noch nicht hinreichend reduziert beziehungsweise aufgehoben wurde.

Ist die Differenz zwischen der Drehzahl und der Zieldrehzahl hinreichend reduziert, insbesondere aufgehoben, sodass beispielsweise das zweite Antriebselement und somit die Schiebemuffe die gleiche Drehzahl wie der Kupplungskörper und somit das Gangrad haben, gibt der Synchronring die Schiebemuffe für deren Verschiebung entlang der Drehachse entlang des Kupplungskörpers frei, da dann der Synchronring relativ zu der Schiebemuffe und relativ zu dem Kupplungskörper um die Drehachse verdreht werden kann, indem die Schiebemuffe entlang der Drehachse in Richtung des Kupplungskörpers verschoben wird. Dadurch kann beispielsweise die zweite Verzahnung der Schiebemuffe durch die dritte Verzahnung des Synchronrings, insbesondere durch Zahnlücken der dritten Verzahnung des Synchronrings, hindurchgeschoben und insbesondere in Eingriff mit der vierten Verzahnung des Kupplungskörpers gebracht beziehungsweise geschoben werden. Dann greift die zweite Verzahnung der Schiebemuffe sowohl in die erste Verzahnung des Synchronkörpers als auch in die vierte Verzahnung des Kupplungskörpers ein, sodass das zweite Antriebselement über die Schiebemuffe und den Kupplungskörper formschlüssig und dadurch drehfest mit dem ersten Antriebselement gekoppelt ist.

Das Freigeben der Schiebemuffe für deren Verschiebung entlang der Drehachse in Richtung des Kupplungskörpers wird auch als mechanische Entsperrphase, Entsperrvorgang, mechanischer Entsperrvorgang, Entsperren oder mechanisches Entsperren bezeichnet, sodass die Synchronisiereinrichtung beispielsweise als Sperrsynchronisierung ausgebildet ist. Durch das Entsperren kann die Schiebemuffe durchgeschaltet werden, worunter zu verstehen ist, dass die Schiebemuffe beziehungsweise ihre zweite Verzahnung in Eingriff mit der vierten Verzahnung gebracht wird.

Um nun die beschriebene Synchronisierung der Antriebselemente und somit den Gangwechsel für Insassen des Kraftfahrzeugs besonders komfortabel und insbesondere ruckfrei gestalten zu können, ist es bei dem Verfahren vorgesehen, dass die Synchronisierkraft während einer ersten Zeitspanne erhöht wird, sodass sich die Drehzahl des ersten Antriebselements der Zieldrehzahl des zweiten Antriebselements annähert. Bevor die Drehzahl der Zieldrehzahl entspricht, insbesondere zeitlich vor der mechanischen Entsperrphase, wird die Synchronisierkraft während einer auf die erste Zeitspanne folgenden, zweiten Zeitspanne kontinuierlich reduziert.

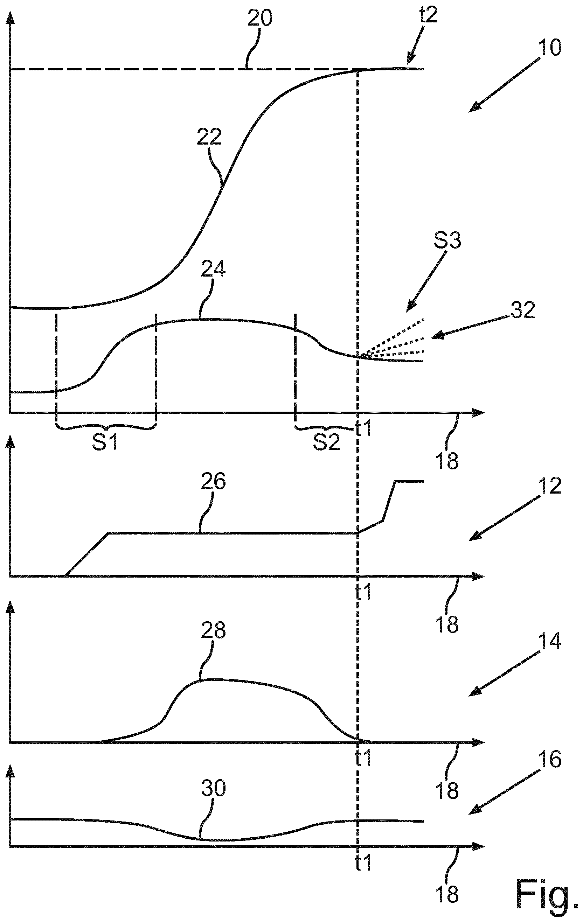

In dem Diagramm 10 ist die Zieldrehzahl mit 20 bezeichnet und mittels einer gestrichelten Linie veranschaulicht. Die Zieldrehzahl wird auch als Synchronisier-Zieldrehzahl bezeichnet. Ferner ist in das Diagramm 10 ein Verlauf 22 eingetragen, welcher die Drehzahl des ersten Antriebselements, insbesondere einen zeitlichen Verlauf der Drehzahl des ersten Antriebselements, veranschaulicht. Ferner ist in die Diagramme 10, 12, 14 und 16 ein Zeitpunkt t1 eingetragen, zu welchem die mechanische Entsperrphase beginnt. In das Diagramm 10 ist darüber hinaus ein Verlauf 24 eingetragen, welcher die Synchronisierkraft, insbesondere deren zeitlichen Verlauf, veranschaulicht. Dabei ist die erste Zeitspanne mit s1 bezeichnet, wobei die zweite Zeitspanne mit s2 bezeichnet ist. Anhand des Diagramms 10 ist besonders gut erkennbar, dass das zumindest im Wesentlichen kontinuierliche Reduzieren der Synchronisierkraft vor dem Zeitpunkt t1 und somit vor der mechanischen Entsperrphase beginnt, sodass die Synchronisierkraft - nachdem sie erhöht wurde - kontinuierlich reduziert wird, bevor das Entsperren erfolgt.

In das Diagramm 12 ist ein Verlauf 26 eingetragen, welcher einen Gangstellerweg veranschaulicht. Der Gangstellerweg ist ein Weg, über welchen ein Gangsteller, insbesondere mittels eines weiteren Aktors oder mittels des Aktors, bewegt wird. Mittels des Gangstellers wird beispielsweise der erste Gang ausgelegt und der zweite Gang eingelegt. Insbesondere wird mittels des Gangstellers die Schiebemuffe auf die beschriebene Weise entlang der Drehachse verschoben und somit in Eingriff mit dem Kupplungskörper beziehungsweise der vierten Verzahnung bewegt.

Der Aktor zum Ausüben der Synchronisierkraft kann als elektrischer oder elektromechanischer Aktor und/oder als pneumatischer Aktor und/oder als hydraulischer Aktor ausgebildet sein. Insbesondere kann der Aktor als hydraulischer Aktor ausgebildet sein, sodass die Synchronisierkraft beispielsweise mittels einer Hydraulikflüssigkeit, insbesondere mittels eines Drucks der Hydraulikflüssigkeit, bewirkt wird. Somit veranschaulicht beispielsweise der Verlauf 24 einen Druck, insbesondere einen Soll-Druck, der Hydraulikflüssigkeit, mittels welcher schließlich die Synchronisierkraft bewirkt wird.

In das Diagramm 14 ist ein Verlauf 28 eingetragen, welcher ein an dem wenigstens einen Rad anliegendes beziehungsweise auf das wenigstens eine Rad wirkendes Störmoment veranschaulicht. In das Diagramm 16 ist ein Verlauf 30 eingetragen, welcher ein Drehmoment des Rads veranschaulicht. Aus der Fig. ist besonders gut erkennbar, dass durch das beschriebene Einstellen der Synchronisierkraft ein harmonischer beziehungsweise harmonisierter Abbau des durch den Verlauf 28 veranschaulichten Störmoments realisierbar ist, sodass das Verfahren ein Verfahren zur harmonisierten Störmomentabschaltung beim Synchronisieren in dem Getriebe ausgebildet ist. Beispielsweise zu einem Zeitpunkt t2, welcher beispielsweise zeitlich auf den Zeitpunkt t1 folgt, erreicht das erste Antriebselement die Zieldrehzahl, welche auch als Synchrondrehzahl bezeichnet wird. Bevor die Drehzahl des ersten Antriebselements der Zieldrehzahl entspricht, das heißt bevor die Drehzahl die Zieldrehzahl erreicht, wird das Störmoment am Rad zumindest reduziert oder vollständig aufgehoben, indem die Synchronisierkraft zumindest im Wesentlichen kontinuierlich reduziert wird, bevor die Drehzahl die Zieldrehzahl erreicht beziehungsweise bevor die mechanische Entsperrphase beginnt.

Beim Synchronisieren wird beispielsweise der maximal zulässige Gradient, insbesondere des Verlaufs 22, in Abhängigkeit von der Differenz zwischen der Drehzahl und der Zieldrehzahl bei Annäherung der Drehzahl an die Zieldrehzahl begrenzt. Dadurch reduziert sich die erforderliche Synchronisierkraft, um den begrenzten und somit geforderten Gradienten einzustellen, insbesondere einzuregeln. Durch die Absenkung der Synchronisierkraft beschleunigt das zu synchronisierende, erste Antriebselement deutlich langsamer im Vergleich zu Verfahren, in welchen die Synchronisierkraft nicht reduziert wird, wodurch sich das aus dem Antrieb entnommene Drehmoment in gleichem Maße reduziert. Dadurch ist zum Zeitpunkt t1 des Beginns der mechanischen Entsperrphase das Störmoment am Rad schon so weit abgebaut, dass das momentenseitige Abkoppeln des beschleunigenden Antriebselements in der Momentenbilanz neutral ausfällt. Gleichzeitig kann durch diese Maßnahme eine wesentliche Erhöhung der Synchronisierdauer vermieden werden, da der maximale Gradient vor der kraftreduzierenden Maßnahme unverändert bleibt. Somit kann eine besonders schnelle und komfortable Synchronisierung realisiert werden.

Aus der Fig. ist anhand des Diagramms 10 erkennbar, dass sich an die zweite Zeitspanne s2 eine dritte Zeitspanne s3 anschließen kann, während welcher die Synchronisierkraft, insbesondere linear, erhöht wird. Somit sind in dem Diagramm 10 mögliche Ausgestaltungen des Verlaufs 24 durch gestrichelte Linien 32 veranschaulicht, sodass anhand der gestrichelten Linien 32 unterschiedliche Ausführungsformen des Verlaufs 24 und somit unterschiedliche zeitliche Verläufe der Synchronisierkraft veranschaulicht sind.

## Patentansprüche

1. Verfahren zum Synchronisieren eines um eine Drehachse drehbaren ersten Antriebselements mit einem sich um die Drehachse mit einer Zieldrehzahl (20) drehenden zweiten Antriebselement eines Antriebsstrangs eines Kraftfahrzeugs, bei welchem mittels eines Aktors eine Synchronisierkraft (24) auf eine Synchronisiereinrichtung ausgeübt wird, wodurch eine Drehzahl (22), mit welcher sich das erste Antriebselement um die Drehachse dreht, mittels der Synchronisiereinrichtung an die Zieldrehzahl (20) angeglichen wird,
**dadurch gekennzeichnet, dass**
die Synchronisierkraft (24) während einer ersten Zeitspanne (s1) erhöht wird, sodass sich die Drehzahl (22) der Zieldrehzahl (20) annähert, wobei die Synchronisierkraft (24) während einer auf die erste Zeitspanne (s1) folgenden, zweiten Zeitspanne (s2) kontinuierlich reduziert wird, bevor die Drehzahl (22) der Zieldrehzahl (20) entspricht.

2. Verfahren nach Anspruch 1,
**dadurch gekennzeichnet, dass**
die Synchronisierkraft (24) während der zweiten Zeitspanne (s2) derart kontinuierlich reduziert wird, dass sich die Drehzahl (22) weiter der Zieldrehzahl (20) annähert.

3. Verfahren nach Anspruch 2,
**dadurch gekennzeichnet, dass**
die Synchronisierkraft (24) während der zweiten Zeitspanne (s2) derart kontinuierlich reduziert wird, dass sich die Drehzahl (22) weiter der Zieldrehzahl (20) annähert, bis die Drehzahl (22) der Zieldrehzahl (20) entspricht.

4. Verfahren nach einem der vorhergehenden Ansprüche,
**dadurch gekennzeichnet, dass**
die Synchronisierkraft (24) während der zweiten Zeitspanne (s2) kontinuierlich reduziert wird, bevor eine mechanische Entsperrphase beginnt, bei welcher ein Synchronring eine Schiebemuffe für eine Verschiebung der Schiebemuffe entlang der Drehachse freigibt, woraufhin die Schiebemuffe entlang der Drehachse relativ zu dem Synchronring verschoben und dadurch in Eingriff mit einer korrespondierenden Verzahnung gebracht wird, um dadurch die Antriebselemente über die Verzahnung und die Schiebemuffe formschlüssig drehfest miteinander zu koppeln.

5. Verfahren nach einem der vorhergehenden Ansprüche,
**dadurch gekennzeichnet, dass**
die Synchronisierkraft (24) während einer sich an die zweite Zeitspanne (s2) anschließenden dritten Zeitspanne (s3) erhöht wird.

6. Verfahren nach Anspruch 5,
**dadurch gekennzeichnet, dass**
die Synchronisierkraft (24) während der dritten Zeitspanne (s3) linear erhöht wird.

7. Verfahren nach einem der vorhergehenden Ansprüche,
**dadurch gekennzeichnet, dass**
als das erste Antriebselement ein Gangrad eines Getriebes mit dem zweiten Antriebselement synchronisiert wird.

8. Verfahren nach Anspruch 7,
**dadurch gekennzeichnet, dass**
das Gangrad bei einem Gangwechsel des Getriebes mit dem zweiten Antriebselement synchronisiert wird.

9. nach einem der vorhergehenden Ansprüche,
**dadurch gekennzeichnet, dass**
als das zweite Antriebselement eine Welle verwendet wird, welche von wenigstens einem Rad des Kraftfahrzeugs angetrieben wird.

10. Antriebsstrang für ein Kraftfahrzeug, mit einem um eine Drehachse drehbaren ersten Antriebselement, mit einem um die Drehachse drehbaren zweiten Antriebselement, mit einer Synchronisiereinrichtung zum Synchronisieren des ersten Antriebselements mit dem zweiten Antriebselement, mit einem Aktor, mittels welchem eine Synchronisierkraft (24) auf die Synchronisiereinrichtung ausübbar ist, um dadurch eine Drehzahl (22) des ersten Antriebselements an eine Zieldrehzahl (20) des zweiten Antriebselements mittels der Synchronisiereinrichtung anzugleichen, und mit einer elektronische Recheneinrichtung, welche dazu ausgebildet ist, den Aktor anzusteuern, um dadurch das Ausüben der Synchronisierkraft (24) auf die Synchronisiereinrichtung einzustellen,
**dadurch gekennzeichnet, dass**
die elektronische Recheneinrichtung dazu ausgebildet ist, den Aktor derart anzusteuern, dass:
- die Synchronisierkraft (24) während einer ersten Zeitspanne (s1) ansteigt, sodass sich die Drehzahl (22) der Zieldrehzahl (20) annähert; und
- die Synchronisierkraft (24) während einer auf die erste Zeitspanne (s1) folgenden, zweiten Zeitspanne (s2) kontinuierlich reduziert wird, bevor die Drehzahl (22) der Zieldrehzahl (20) entspricht.

## Claims

1. Method for synchronizing a first drive element which can be rotated about a rotational axis with a second drive element, which rotates about the rotational axis at a target rotational speed (20), of a drive train of a motor vehicle, in the case of which method a synchronizing force (24) is exerted on a synchronizing device by means of an actuator, as a result of which a rotational speed (22), at which the first drive element rotates about the rotational axis, is matched to the target rotational speed (20) by means of the synchronizing device,
**characterized in that**
the synchronizing force (24) is increased during a first time period (s1), with the result that the rotational speed (22) approaches the target rotational speed (20), the synchronizing force (24) being reduced continuously during a second time period (s2) which follows the first time period (s1), before the rotational speed (22) corresponds to the target rotational speed (20).

2. Method according to Claim 1,
**characterized in that**
the synchronizing force (24) is reduced continuously during the second time period (s2) in such a way that the rotational speed (22) further approaches the target rotational speed (20).

3. Method according to Claim 2,
**characterized in that**
the synchronizing force (24) is reduced continuously during the second time period (s2) in such a way that the rotational speed (22) further approaches the target rotational speed (20) until the rotational speed (22) corresponds to the target rotational speed (20).

4. Method according to one of the preceding claims,
**characterized in that**
the synchronizing force (24) is reduced continuously during the second time period (s2) before a mechanical unlocking phase begins, in which a synchronizer ring releases a slider sleeve for a displacement of the slider sleeve along the rotational axis, whereupon the slider sleeve is displaced along the rotational axis relative to the synchronizer ring and, as a result, is brought into engagement with a corresponding toothing system, in order to couple the drive elements via the toothing system and the slider sleeve in a positively locking manner fixedly to one another for conjoint rotation as a result.

5. Method according to one of the preceding claims,
**characterized in that**
the synchronizing force (24) is increased during a third time period (s3) which follows the second time period (s2).

6. Method according to Claim 5,
**characterized in that**
the synchronizing force (24) is increased in a linear manner during the third time period (s3).

7. Method according to one of the preceding claims,
**characterized in that**
a gear wheel of a transmission, as the first drive element, is synchronized with the second drive element.

8. Method according to Claim 7,
**characterized in that**
the gear wheel is synchronized with the second drive element in the case of a gear change of the transmission.

9. according to one of the preceding claims,
**characterized in that**
a shaft which is driven by at least one wheel of the motor vehicle is used as the second drive element.

10. Drive train for a motor vehicle, with a first drive element which can be rotated about a rotational axis, with a second drive element which can be rotated about the rotational axis, with a synchronizing device for synchronizing the first drive element with the second drive element, with an actuator, by means of which a synchronizing force (24) can be exerted on the synchronizing device, in order to match a rotational speed (22) of the first drive element to a target rotational speed (20) of the second drive element by means of the synchronizing device as a result, and with an electronic computing device which is configured to actuate the actuator, in order to set the exertion of the synchronizing force (24) on the synchronizing device as a result,
**characterized in that**
the electronic computing device is configured to actuate the actuator in such a way that:
- the synchronizing force (24) rises during a first time period (s1), with the result that the rotational speed (22) approaches the target rotational speed (20); and
- the synchronizing force (24) is reduced continuously during a second time period (s2) which follows the first time period (s1), before the rotational speed (22) corresponds to the target rotational speed (20).

## Revendications

1. Procédé permettant de synchroniser un premier élément d'entraînement, pouvant tourner autour d'un axe de rotation, avec un deuxième élément d'entraînement, tournant autour de l'axe de rotation à une vitesse de rotation cible (20), d'une chaîne cinématique d'un véhicule automobile, dans lequel une force de synchronisation (24) est exercée sur un dispositif de synchronisation au moyen d'un actionneur, de sorte qu'une vitesse de rotation (22), à laquelle le premier élément d'entraînement tourne autour de l'axe de rotation, soit adaptée à la vitesse de rotation cible (20) au moyen du dispositif de synchronisation,
**caractérisé en ce que**
la force de synchronisation (24) est augmentée pendant un premier laps de temps (s1), de sorte que la vitesse de rotation (22) se rapproche de la vitesse de rotation cible (20), la force de synchronisation (24) étant réduite de manière continue avant que la vitesse de rotation (22) ne corresponde à la vitesse de rotation cible (20), pendant un deuxième laps de temps (s2) subséquent au premier laps de temps (s1).

2. Procédé selon la revendication 1,
**caractérisé en ce que**
la force de synchronisation (24) est réduite de manière continue pendant le deuxième laps de temps (s2), de telle sorte que la vitesse de rotation (22) se rapproche davantage de la vitesse de rotation cible (20).

3. Procédé selon la revendication 2,
**caractérisé en ce que**
la force de synchronisation (24) est réduite de manière continue pendant le deuxième laps de temps (s2), de telle sorte que la vitesse de rotation (22) se rapproche davantage de la vitesse de rotation cible (20), jusqu'à ce que la vitesse de rotation (22) corresponde à la vitesse de rotation cible (20).

4. Procédé selon l'une des revendications précédentes,
**caractérisé en ce que**
la force de synchronisation (24) est réduite de manière continue pendant le deuxième laps de temps (s2), avant qu'une phase de déblocage mécanique ne commence, phase lors de laquelle une bague de synchroniseur libère une douille coulissante pour un déplacement de la douille coulissante le long de l'axe de rotation, après quoi la douille coulissante est déplacée par rapport à la bague de synchroniseur le long de l'axe de rotation et est donc amenée en prise avec une denture correspondante, afin d'accoupler ainsi les éléments d'entraînement l'un à l'autre de manière solidaire en rotation par complémentarité de formes par le biais de la denture et de la douille coulissante.

5. Procédé selon l'une des revendications précédentes,
**caractérisé en ce que**
la force de synchronisation (24) est augmentée pendant un troisième laps de temps (s3) suivant le deuxième laps de temps (s2).

6. Procédé selon la revendication 5,
**caractérisé en ce que**
la force de synchronisation (24) est augmentée de manière linéaire pendant le troisième laps de temps (s3).

7. Procédé selon l'une des revendications précédentes,
**caractérisé en ce**
**qu'**en tant que premier élément d'entraînement, un pignon de vitesse d'une transmission est synchronisé avec le deuxième élément d'entraînement.

8. Procédé selon la revendication 7,
**caractérisé en ce que**
le pignon de vitesse est synchronisé avec le deuxième élément d'entraînement lors d'un changement de vitesse de la transmission.

9. selon l'une des revendications précédentes,
**caractérisé en ce**
**qu'**un arbre est utilisé en tant que deuxième élément d'entraînement, lequel arbre est entraîné par au moins une roue du véhicule automobile.

10. Chaîne cinématique pour un véhicule automobile, comprenant un premier élément d'entraînement pouvant tourner autour d'un axe de rotation, comprenant un deuxième élément d'entraînement pouvant tourner autour de l'axe de rotation, comprenant un dispositif de synchronisation permettant de synchroniser le premier élément d'entraînement avec le deuxième élément d'entraînement, comprenant un actionneur, au moyen duquel une force de synchronisation (24) peut être exercée sur le dispositif de synchronisation, afin d'adapter ainsi une vitesse de rotation (22) du premier élément d'entraînement à une vitesse de rotation cible (20) du deuxième élément d'entraînement au moyen du dispositif de synchronisation, et comprenant un dispositif de calcul électronique, lequel est configuré pour commander l'actionneur, afin de régler ainsi l'application de la force de synchronisation (24) au dispositif de synchronisation,
**caractérisé en ce que**
le dispositif de calcul électronique est configuré pour commander l'actionneur de telle sorte que :
- la force de synchronisation (24) croisse pendant un premier laps de temps (s1), de sorte que la vitesse de rotation (22) se rapproche de la vitesse de rotation cible (20) ;
et
- la force de synchronisation (24) soit réduite de manière continue pendant un deuxième laps de temps (s2) suivant le premier laps de temps (s1), avant que la vitesse de rotation (22) ne corresponde à la vitesse de rotation cible (20).
